# FASCICULE DE BREVET EUROPEEN

(11) **EP 2 852 516 B1**
(45) Date de publication et mention de la délivrance du brevet: **13.07.2016**
(21) Numéro de dépôt: 13725939.6
(22) Date de dépôt: 22.05.2013
(51) Int. Cl.: B60T 11/26

(54) **RÉSERVOIR DE LIQUIDE DE FREIN AVEC ÉQUILIBRAGE DE PRESSION**
BREMSFLÜSSIGKEITSBEHÄLTER MIT DRUCKAUSGLEICH
BRAKE FLUID RESERVOIR WITH PRESSURE BALANCING

(30) Priorité: 23.05.2012 FR 1254714
(43) Date de publication de la demande: 01.04.2015
(73) Titulaire: Robert Bosch GmbH, 70442 Stuttgart (DE)
(72) Inventeur: MAURY, Vincent, F-93210 La Plaine St Denis (FR); L'AOT, Jean-Michel, F-93240 Stains (FR); LENCZNER, Sylvain, F-77450 Esbly (FR)
(86) Numéro de dépôt international: PCT/EP2013/060478
(87) Numéro de publication internationale: WO 2013/174851

(56) Documents cités:
- EP-A1- 1 626 180
- EP-A1- 2 189 344
- FR-A1- 2 903 971

## Description

### Domaine de l'invention

La présente invention se rapporte à un réservoir de liquide de frein avec mise à l'air pour son équilibrage de la pression, le dessus du corps du réservoir étant muni d'un goulot fileté recevant un bouchon fileté vissé sur le goulot et comportant un passage à chicane pour la mise à l'air du réservoir.

### Etat de la technique

Il est connu de réaliser des réservoirs à liquide de frein avec équilibrage de pression. Il existe différents modes de réalisation de réservoirs dont le bouchon comporte un élément formant une chicane permettant l'équilibrage de la pression tout en évitant la sortie du liquide de frein sous l'effet d'accélération/décélération brusque du véhicule, par exemple en cas de freinage brutal. Mais ces solutions ne sont pas toujours satisfaisantes car le risque de sortie de liquide subsiste à cause de l'orientation de la chicane qui peut être dans le mauvais sens par rapport à l'axe du véhicule.

Le document EP 2 189 344 décrit un réservoir de liquide de frein muni d'un moyen d'équilibrage de pression, permettant d'éviter le risque de sortie de liquide de frein dans les conditions exceptionnelles, grâce à l'orientation particulière de la sortie du bouchon par indexage de la garniture formant la chicane équipant l'intérieur du bouchon. Cette garniture est positionnée de façon précise pour que le bouchon en fin de vissage soit orienté de manière appropriée et que la sortie de la chicane ne soit pas tournée vers l'avant, orientation qui serait la plus favorable à la sortie de liquide de frein de la chicane sous l'effet d'un freinage brutal.

Mais cette solution quoiqu'intéressante, a l'inconvénient d'être d'une réalisation complexe puisque le bouchon se compose du corps de bouchon en forme de capuchon avec un filet indexé et il reçoit la garniture formant une chicane, elle-même indexée, par l'intermédiaire d'un moyen de liaison respectant l'indexage. Enfin, un joint est interposé entre le bouchon muni de sa chicane et le dessus du goulot. Le goulot doit, lui aussi, avoir un filet indexé de façon qu'en fin de vissage du bouchon, l'orientation de la chicane soit la bonne.

Cette solution a l'inconvénient d'une fabrication complexe et d'opérations de montage supplémentaires entraînant plus globalement un coût relativement élevé.

### But de l'invention

La présente invention a pour but de réaliser un réservoir de liquide de frein à équilibrage de pression qui soit particulièrement simple à réaliser et à utiliser, de manière à réduire le coût du réservoir et garantir l'efficacité de l'équilibrage de la pression tout en évitant le risque de sortie de liquide de frein.

### Exposé et avantages de l'invention

A cet effet, l'invention a pour objet un réservoir de liquide de frein du type défini ci-dessus, caractérisé en ce que,
A) le goulot a un dessus avec un canal d'équilibrage de pression,
   * ouvert sur le dessus,
   * ayant une première extrémité formant une entrée communiquant avec l'intérieur du réservoir et une seconde extrémité formant une sortie communiquant avec l'atmosphère ambiante,
   * occupant au moins une partie de la périphérie du dessus du goulot,
   * ce canal situé du côté intérieur du goulot étant entouré du côté extérieur par une surface d'étanchéité,
B) le bouchon comporte :
   * un bord périphérique muni du filetage intérieur correspondant au filetage extérieur du goulot, et
   * un fond plat pour venir, lorsque le bouchon est vissé, contre le dessus du goulot
   * une surface annulaire de contact entre la lèvre d'étanchéité et le bord du bouchon, cette surface étant munie d'une ouverture chevauchant la région de sortie du canal pour constituer la sortie du canal lorsque le bouchon est vissé sur le goulot.

Le réservoir selon l'invention a l'avantage d'avoir un bouchon en une seule pièce intégrant la partie de mise à l'air. De même, le goulot intègre le canal formant la chicane dans son dessus de sorte que l'ensemble est d'une réalisation particulièrement simple. L'utilisation est tout aussi simple et le bouchon peut être mis ainsi de manière très facile dans la position appropriée pour non seulement faire communiquer l'intérieur du réservoir de liquide de frein à l'extérieur et équilibrer la pression pour éviter toute dépression dans le réservoir même en cas de puisage important et rapide de liquide de frein au moment d'une action de freinage mais évitant également que précisément au moment d'une action de freinage brutal le liquide secoué dans le réservoir, ne risque pas de sortir par le chemin d'équilibrage formé par le canal.

Suivant une caractéristique avantageuse, l'entrée du canal est une entrée latérale traversant la cloison bordant le canal, côté intérieur.

Cette entrée latérale se réalise très simplement avec un moule sans nécessiter de parties mobiles puisque cette entrée latérale est ouverte vers le haut.

Suivant une autre caractéristique avantageuse, le canal occupe pratiquement toute la périphérie du dessus du goulot et a une forme circulaire, son entrée étant séparée de sa sortie par une cloison.

Cette forme de réalisation circulaire du canal est particulièrement simple puisque le canal est forme de circulaire et l'entrée et la sortie au niveau du canal sont simplement séparées par une cloison, l'entrée débouchant dans le réservoir latéralement par l'enlèvement d'une partie de la paroi, alors que la sortie communique par le dessus.

Suivant une autre caractéristique caractéristique avantageuse, le canal d'équilibrage de pression fait plus d'un tour périphérique dans le dessus du goulot.

Suivant une autre caractéristique avantageuse, le fond plat a une lèvre circulaire d'étanchéité occupant une position correspondant à l'ouverture du goulot lorsque le bouchon est vissé sur le goulot de façon que la lèvre circulaire d'étanchéité vienne dans le goulot contre la cloison bordant le canal côté intérieur.

Cette lèvre d'étanchéité complète l'étanchéité du canal sur toute la périphérie sans gêner l'ouverture de l'entrée du canal qui peut passer sous la lèvre. Cette lèvre garantit l'efficacité du chemin d'équilibrage de pression constitué par le canal une fois le bouchon vissé sur le goulot.

Suivant une autre caractéristique avantageuse, la sortie est une ouverture en forme de cavité communiquant avec la région du filetage du bouchon et celle du goulot.

Suivant une autre caractéristique avantageuse, le dessus du bouchon comporte sur sa face extérieure un repère d'orientation permettant de connaître la position de vissage du bouchon.

### Dessins

La présente invention sera décrite ci-après de manière plus détaillée à l'aide d'un exemple de réservoir de liquide de frein avec équilibrage de pression représenté schématiquement dans les dessins annexés dans lesquels :
- la figure 1 est une vue isométrique du dessus du réservoir limité au goulot et au bouchon coupé par un plan diamétral,
- la figure 2 est une vue isométrique du goulot du réservoir,
- la figure 3 est une vue isométrique du goulot avec le bouchon coupé par un plan diamétral et vissé sur le goulot,
- la figure 4 est une vue de dessous du bouchon.

### Description d'un mode de réalisation

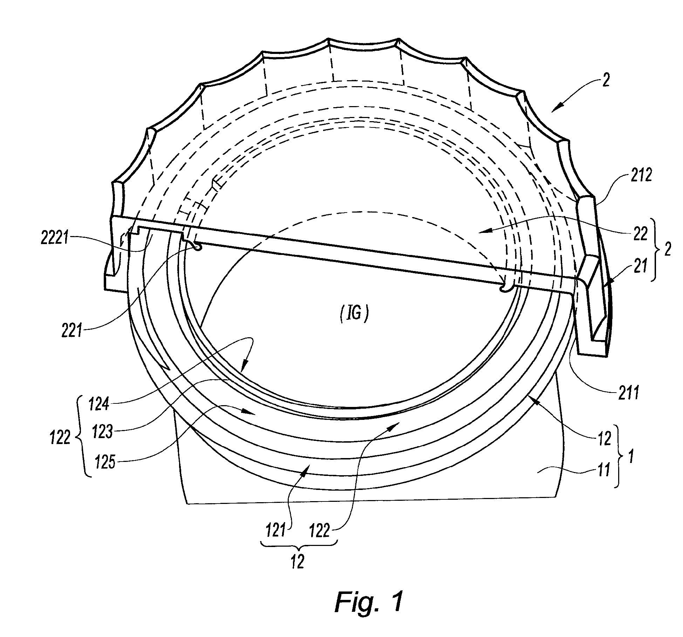

Selon la figure 1, un réservoir de liquide de frein 1 représenté très partiellement a un dessus 11 muni d'un goulot fileté 12 fermé par un bouchon 2 vissé pour permettre de remplir le réservoir tout en assurant l'équilibrage de la pression à l'intérieur du réservoir. L'équilibrage doit se faire rapidement pendant le fonctionnement du système de freinage, en cas de prélèvement rapide du liquide de frein pour que cette pression soit à la pression atmosphérique évitant la création d'une dépression qui bloquerait le puisage du liquide de frein par le maître-cylindre alimenté par le réservoir 1.

Le bouchon 2 a un bord 21 à filetage intérieur 211 correspondant à celui 121 du goulot 12 et un fond 22. Extérieurement, le bouchon 2 est muni de parties en relief 212 pour faciliter sa préhension pour le serrage ou le desserrage.

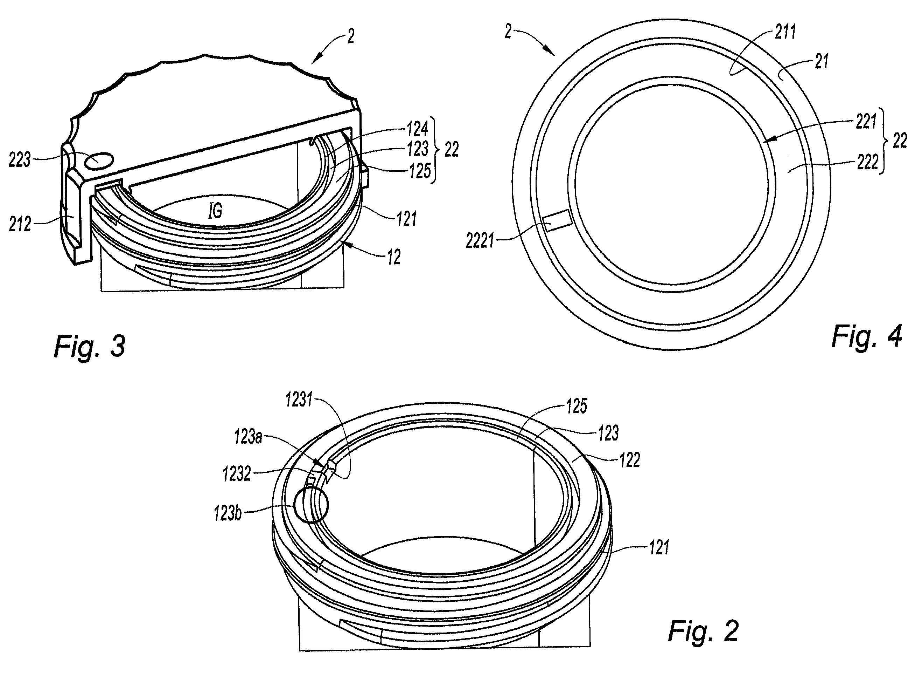

Selon la figure 2, le goulot 12 comporte au-delà du filetage extérieur 121, un dessus 122 ayant du côté intérieur (IG) du goulot, un canal d'équilibrage 123 ouvert vers le haut. Ce canal d'équilibrage 123 en creux dans le dessus 122 y occupe une partie importante de la périphérie. Dans ce mode de réalisation, le canal 123 occupe pratiquement toute la périphérie. Il est bordé, côté intérieur (IG) par une cloison 124 et du côté extérieur du goulot par une surface annulaire d'étanchéité 125.

Selon la figure 2, le canal 123 a une première extrémité 123a avec une entrée constituée par une découpe 1231 dans la cloison intérieure 124 et une seconde extrémité 123b correspondant à la sortie ou région de sortie 123b. Le canal 123 occupant la quasi-périphérie du dessus 122 du goulot 12, sépare son entrée 123a et sa région de sortie 123b par une cloison 1232 de façon que l'entrée 123a du canal 123 et sa sortie 123b ne puissent communiquer directement. La communication entre l'entrée 123a et la sortie 123b se fait seulement par le canal 123 lorsque le bouchon 2 est vissé.

Selon les figures 1, 3, 4 le bouchon 2 en forme de capuchon a un bord périphérique 21 dont la surface intérieure est munie du filetage 212 pour son vissage sur le filetage 121 du goulot 12 et un fond plat 22 (figure 4) dont dépasse une lèvre circulaire d'étanchéité 221. Cette lèvre circulaire 221 a une géométrie qui lui permet, lorsque le bouchon 2 est vissé sur le goulot 12, de venir dans le goulot et de s'appliquer contre la cloison intérieure 124 bordant le canal 123. Au-delà de la lèvre 221, le fond 22 est plat et forme une surface annulaire de contact 222 destinée à coiffer le dessus 122 du goulot 12 y compris le canal 123 et la cloison 124 de façon à créer un conduit d'équilibrage de pression entre l'entrée 123a du canal 123 et sa sortie 123b.

La surface annulaire de contact 222 est munie d'une ouverture 2221 en forme de cavité qui barre cette surface 222 par exemple suivant une direction radiale de façon que lorsque le bouchon 2 est vissé sur le goulot 12, l'ouverture 2221 chevauche le canal 123 et constitue ainsi la sortie du canal.

Le vissage du bouchon 2 se fait de façon que son ouverture 2221 vienne dans la région de sortie 123b du canal 123. Le bouchon 2 comporte extérieurement un repère 223 indiquant la position de l'ouverture 2221 pour la positionner par vissage à l'endroit approprié.

Le bouchon 2 peut également être indexé par le dimensionnement de son filetage 211 et celui 121 du goulot 12 pour qu'en fin de vissage, l'ouverture 2221 du bouchon 2 se trouve dans la région de sortie 123b du canal.

Le bouchon 2 vissé sur le goulot 12 forme avec le canal 123 un chemin de communication de section très réduite donc avec une importante perte de charge entre l'entrée du canal et sa sortie qui permet l'équilibrage de la pression à l'intérieur du réservoir 1 pour sa mise à la pression atmosphérique tout en évitant que le liquide de frein ne puisse sortir du réservoir à travers le bouchon 2.

Suivant la position d'installation du réservoir 1 dans l'enceinte du moteur, le bouchon 2 sera orienté de la manière la plus appropriée pour éviter que le mouvement brusque du liquide de frein dans le réservoir, par exemple sous l'effet d'un freinage brusque, ne soit pas poussé à travers le canal vers la sortie. De façon préférentielle, la sortie est orientée vers l'arrière qui correspond à la position vers laquelle le liquide de frein risque d'être le moins poussé ou d'être poussé le moins violemment pour être forcé à travers le canal et suinter par le bouchon.

Suivant une variante non représentée, le canal 123 qui, dans l'exemple ci-dessus, occupe pratiquement toute la périphérie du dessus 122 du goulot, peut également avoir une longueur moindre et n'occuper qu'une fraction de cette périphérie ou une longueur s'étendant sur plus d'un tour dans le dessus du goulot. Dans ce cas, l'ouverture en forme de cavité 2221 ne chevauche que la région de sortie de ce canal sans chevaucher une autre partie du canal de façon que le chemin de communication entre l'entrée et la sortie du réservoir pour l'équilibrage s'étende sur toute la longueur du canal.

Le réservoir de liquide de frein et son bouchon se réalisent simplement en matière plastique par moulage. La forme tant du goulot que celle du bouchon permettent une fabrication très simple sans nécessiter de moule complexe et à éléments mobiles.

### NOMENCLATURE

1 réservoir de liquide de frein
   11 dessus du réservoir
   12 goulot fileté du réservoir
      121 filetage du goulot
      122 dessus du goulot
   123 canal
      123a première extrémité du canal
      123b seconde extrémité du canal
      1231 découpe de la première extrémité 123a du canal
      1232 cloison de la seconde extrémité 123b du canal
   124 cloison intérieure délimitant le canal 123
   125 surface annulaire d'étanchéité
2 bouchon
   21 bord
      211 filetage
      212 parties en relief
   22 fond du bouchon
      221 lèvre d'étanchéité
      222 surface annulaire de contact
      2221 ouverture en forme de cavité
      223 repère
IG intérieur du goulot 12

## Revendications

1. Réservoir de liquide de frein avec mise à l'air pour son équilibrage de la pression, le dessus du corps du réservoir étant muni d'un goulot fileté recevant un bouchon fileté vissé sur le goulot et comportant un passage à chicane pour la mise à l'air du réservoir,
réservoir **caractérisé en ce que**
A) le goulot (12) a un dessus (122) avec un canal d'équilibrage de pression (123),
* ouvert sur le dessus,
* ayant une première extrémité (123a) formant une entrée communiquant avec l'intérieur (IG) du réservoir et une seconde extrémité (123b) formant une sortie communiquant avec l'atmosphère ambiante,
* occupant au moins une partie de la périphérie du dessus (122) du goulot,
* ce canal (123) situé du côté intérieur (IG) du goulot (12) étant entouré du côté extérieur par une surface d'étanchéité (125),
B) le bouchon (2) comporte :
* un bord périphérique (21) muni du filetage intérieur (211) correspondant au filetage extérieur (121) du goulot (12), et
* un fond plat (22) pour venir, lorsque le bouchon (2) est vissé, contre le dessus (12) du goulot
* une surface annulaire de contact (222) entre la lèvre d'étanchéité (221) et le bord (21) du bouchon (2), cette surface (222) étant munie d'une ouverture (2221) chevauchant la région de sortie (123b) du canal (123) pour constituer la sortie du canal (123) lorsque le bouchon (2) est vissé sur le goulot (12).

2. Réservoir de liquide de frein selon la revendication 1,
**caractérisé en ce que**
l'entrée (123a) du canal (123) est une entrée latérale (1231) traversant la cloison (124) bordant le canal (123), côté intérieur (IG).

3. Réservoir de liquide de frein selon la revendication 1,
**caractérisé en ce que**
le canal occupe pratiquement toute la périphérie du dessus (122) du goulot (12) et a une forme circulaire, son entrée (123a) étant séparée de sa sortie (123b) par une cloison (1232).

4. Réservoir de liquide de frein selon la revendication 1,
**caractérisé en ce que**
le canal d'équilibrage de pression (123) fait plus d'un tour périphérique dans le dessus (122) du goulot (12).

5. Réservoir de liquide de frein selon la revendication 1,
**caractérisé en ce que**
le fond plat (22) a une lèvre circulaire d'étanchéité (221) occupant une position correspondant à l'ouverture du goulot (12) lorsque le bouchon (2) est vissé sur le goulot de façon que la lèvre circulaire d'étanchéité (221) vienne dans le goulot contre la cloison (124) bordant le canal (123) côté intérieur.

6. Réservoir de liquide de frein selon la revendication 1,
**caractérisé en ce que**
l'ouverture (2221) en forme de cavité communiquant avec la région du filetage du bouchon (2) et celle du goulot (12).

7. Réservoir de liquide de frein selon la revendication 1,
**caractérisé en ce que**
le dessus (22) du bouchon (2) comporte sur sa face extérieure un repère d'orientation (223) permettant de connaître la position de vissage du bouchon.

## Patentansprüche

1. Bremsflüssigkeitsbehälter mit Luftkontakt für seinen Druckausgleich, wobei die Oberseite des Behälterkörpers mit einem mit Gewinde versehenen Hals versehen ist, der einen mit Gewinde versehenen Verschluss aufnimmt, der auf den Hals geschraubt ist und einen verengten Durchgang für den Luftkontakt des Behälters aufweist,
wobei der Behälter **dadurch gekennzeichnet ist, dass**
A) der Hals (12) eine Oberseite (122) mit einem Druckausgleichskanal (123) besitzt,
- der nach oben offen ist,
- der ein erstes Ende (123a) besitzt, das einen mit dem Innenraum (IG) des Behälters in Kommunikation stehenden Eingang bildet, und ein zweites Ende (123b) besitzt, das einen mit der umgebenden Atmosphäre in Kommunikation stehenden Ausgang bildet, und
- der wenigstens einen Teil des Umfangs der Oberseite (122) des Halses einnimmt,
- wobei dieser Kanal (123), der sich auf der Innenseite (IG) des Halses (12) befindet, auf der Außenseite von einer Dichtungsfläche (125) umgeben ist,
B) der Verschluss (2) Folgendes umfasst:
- einen Umfangsrand (21), der mit einem Innengewinde (211) versehen ist, das dem Außengewinde (121) des Halses (12) entspricht, und
- einen ebenen Boden (22), um dann, wenn der Verschluss (2) aufgeschraubt ist, gegen die Oberseite (12) des Halses zu drücken,
- eine ringförmige Kontaktoberfläche (222) zwischen der Dichtungslippe (221) und dem Rand (21) des Verschlusses (2), wobei diese Oberfläche (222) mit einer Öffnung (2221) versehen ist, die mit dem Ausgangsbereich (123b) des Kanals (123) überlappt, um den Ausgangskanal (123) zu bilden, wenn der Verschluss (2) auf den Hals (12) geschraubt ist.

2. Bremsflüssigkeitsbehälter nach Anspruch 1,
**dadurch gekennzeichnet, dass**
der Eingang (123a) des Kanals (123) ein seitlicher Eingang (1231) ist, der die Trennwand (124) durchquert, die den Kanal (123) auf der Innenseite (IG) begrenzt.

3. Bremsflüssigkeitsbehälter nach Anspruch 1,
**dadurch gekennzeichnet, dass**
der Kanal im Wesentlichen den gesamten Umfang der Oberseite (122) des Halses (12) einnimmt und eine Kreisform hat, wobei sein Eingang (123a) von seinem Ausgang (123b) durch eine Trennwand (1232) getrennt ist.

4. Bremsflüssigkeitsbehälter nach Anspruch 1,
**dadurch gekennzeichnet, dass**
der Druckausgleichskanal (123) in der Oberseite (122) des Halses (12) mehr als einen Umfang durchläuft.

5. Bremsflüssigkeitsbehälter nach Anspruch 1,
**dadurch gekennzeichnet, dass**
der ebene Boden (22) eine kreisförmige Dichtungslippe (221) besitzt, die eine Position einnimmt, die der Öffnung des Halses (12) entspricht, wenn der Verschluss (2) auf den Hals geschraubt ist, derart, dass die kreisförmige Dichtungslippe (221) in dem Hals gegen die Trennwand (124) drückt, die den Kanal (123) auf der Innenseite begrenzt.

6. Bremsflüssigkeitsbehälter nach Anspruch 1,
**dadurch gekennzeichnet, dass**
die Öffnung (2221) in Form eines Hohlraums, der mit dem Gewindebereich des Verschlusses (2) und jenem des Halses (12) in Kommunikation steht.

7. Bremsflüssigkeitsbehälter nach Anspruch 1,
**dadurch gekennzeichnet, dass**
die Oberseite (22) des Verschlusses (2) auf ihrer äußeren Fläche eine Orientierungsmarkierung (223) aufweist, die ermöglicht, die Schraubposition des Verschlusses zu kennen.

## Claims

1. Brake fluid reservoir with venting for pressure balancing therein, the top of the body of the reservoir being provided with a threaded neck that receives a threaded stopper which is screwed onto the neck and comprises a passage having a chicane for venting the reservoir,
the reservoir being **characterized in that**
A) the neck (12) has a top (122) with a pressure balancing channel (123) which
* is open at the top,
* has a first end (123a) that forms an inlet communicating with the inside (IG) of the reservoir and a second end (123b) that forms an outlet communicating with the ambient atmosphere,
* takes up at least a part of the periphery of the top (122) of the neck,
* this channel (123) situated on the inner side (IG) of the neck (12) being surrounded on the outer side by a sealing surface (125),
B) the stopper (2) has:
* a peripheral edge (21) provided with the internal thread (211) that corresponds to the external thread (121) of the neck (12), and
* a flat bottom (22) for coming into contact with the top (12) of the neck when the stopper (2) is screwed on,
* an annular contact surface (222) between the sealing lip (221) and the edge (21) of the stopper (2), this surface (222) being provided with an opening (2221) that overlaps the outlet region (123b) of the channel (123) so as to form the outlet of the channel (123) when the stopper (2) is screwed onto the neck (12).

2. Brake fluid reservoir according to Claim 1, **characterized in that**
the inlet (123a) of the channel (123) is a lateral inlet (1231) that passes through the baffle (124) that borders the channel (123), on the inner side (IG).

3. Brake fluid reservoir according to Claim 1, **characterized in that**
the channel takes up virtually all of the periphery of the top (122) of the neck (12) and has a circular shape, its inlet (123a) being separated from its outlet (123b) by a baffle (1232).

4. Brake fluid reservoir according to Claim 1, **characterized in that**
the pressure balancing channel (123) makes more than one peripheral circuit in the top (122) of the neck (12) .

5. Brake fluid reservoir according to Claim 1, **characterized in that**
the flat bottom (22) has a circular sealing lip (221) that takes up a position corresponding to the opening in the neck (12) when the stopper (2) is screwed onto the neck such that the circular sealing lip (221) comes into contact, in the neck, with the baffle (124) bordering the channel (123) on the inner side.

6. Brake fluid reservoir according to Claim 1, **characterized in that**
the opening (2221) in the form of a cavity communicating with the region of the thread of the stopper (2) and that of the neck (12).

7. Brake fluid reservoir according to Claim 1, **characterized in that**
the top (22) of the stopper (2) has on its outer face an orientation marker (223) for indicating the screwed position of the stopper.
